# FASCICULE DE BREVET EUROPEEN

(11) **EP 0 897 748 B1**
(45) Date de publication et mention de la délivrance du brevet: **05.03.2008**
(21) Numéro de dépôt: 98401991.9
(22) Date de dépôt: 05.08.1998
(51) Int. Cl.: B01J 33/00

(54) **Protection de catalyseurs par dépôt de couche protectrice**
Katalysatorenschutz durch Abscheidung einer Schutzschicht
Catalysts protection by a protective coating

(30) Priorité: 11.08.1997 FR 9710361
(43) Date de publication de la demande: 24.02.1999
(73) Titulaire: EURECAT SA., 07800 La Voulte-sur-Rhône (FR)
(72) Inventeur: Darcissac, Jean, 07800 Saint Georges les Bains (FR); Labruyere, Franck, 69003 Lyon (FR); Brahma, Nilanjan, 07800 La Voulte Sur Rhone (FR); Dufresne, Pierre, 26000 Valence (FR)
(74) Mandataire: Benoist, François

(56) Documents cités:
- EP-A- 0 020 123
- EP-A- 0 311 508
- WO-A-94/25157
- US-A- 3 453 217
- US-A- 4 073 748
- US-A- 4 900 713

## Description

Les catalyseurs hétérogènes sont souvent constitués d'une phase active instable à l'air. Il en est ainsi par exemple des catalyseurs d'hydrotraitement (ou réactions de raffinage ou d'hydroconversion d'hydrocarbures) contenant les associations métalliques CoMo, NiMo, NiW sur support alumine et/ou silice alumine qui contiennent une phase active de type sulfure métallique. Un autre exemple est constitué par les catalyseurs d'hydrogénation ou de steam reforming à base de nickel, contenant de 10 à 70% poids de Ni. Ces mêmes solides sont aussi utilisés en tant que piège à soufre. Après réduction de l'oxyde NiO en métal, le solide est sensible à l'air, voire pyrophorique. C'est vrai aussi des systèmes à base de Cuivre, comme les Cuivre-Chrome pour l'hydrogénation, les Cuivre-Zinc pour la réaction de conversion du monoxyde de carbone (water gas shift) dans les unités d'hydrogène. Il y a également les catalyseurs à base de Fer dans ces mêmes unités (Fer-Chrome) ou pour la synthèse d'ammoniac qui s'utilisent après une activation réductrice. Dans une autre catégorie, se trouvent les catalyseurs d'isomérisation de n-butane ou naphta léger à base de Platine et d'alumine fortement chlorée pour lesquels la phase active, apparentée à un chlorure d'aluminium, est fortement sensible à l'atmosphère ambiante (oxygène et eau).

Les pratiques développées par l'industrie tiennent compte de cette contrainte.
Ainsi, pour les catalyseurs d'hydrotraitement de type CoMo, NiMo, NiW sur support de préférence amorphe, la phase active n'est générée qu'après chargement du catalyseur dans le réacteur lui-même, sous pression d'hydrogène et d'un composé sulfuré. A la fin du cycle, le catalyseur est enlevé du réacteur et mis en contact avec l'air, sans qu'il se produise de réactions violentes, car la phase active est recouverte de composés carbonés qui limitent le contact avec l'oxygène. Il peut néanmoins y avoir un peu d'échauffement de ces catalyseurs lors de la mise à l'atmosphère, dû à une oxydation des phases sulfures et certaines techniques ont essayé de résoudre ces problèmes. On citera par exemple l'ajout de composés polyaromatiques, brevet USP 4912 071 de KASHIMA and CHIYODA, Japan ; l'ajout de composés de type amines, brevets de Nippon Mining Company déposés en 1977 exclusivement au Japon.

Pour des catalyseurs à base de métaux de transition, comme le Nickel, Cuivre, Fer, l'étape de réduction sous hydrogène se fait en général aussi dans l'unité. Dans certains cas, la réduction s'effectue en "hors site" dans un réacteur distinct du système réactionnel et le catalyseur doit être alors passivé pour éviter tout risque d'échauffement pendant le transport, le stockage du catalyseur et le chargement du réacteur. Cette passivation peut s'effectuer de trois façons différentes.

La plus courante est une oxydation superficielle à l'air dilué par un gaz inerte. Elle s'effectue en augmentant très lentement la pression partielle d'oxygène de façon à limiter l'élévation de température. Cette procédure permet de créer une couche superficielle d'oxyde métallique qui protège le métal réduit et permet ainsi de manipuler le solide à l'air. L'inconvénient est qu'il faut à nouveau éliminer cette couche d'oxyde dans le réacteur catalytique, en général à chaud. Par exemple, si un catalyseur à base de Nickel à l'état frais doit être réduit autour de 400°C dans l'unité, un catalyseur réduit hors site et passivé par réoxydation superficielle doit à nouveau être réduit dans l'unité à une température de 200-250°C. Ceci impose d'avoir les fours adéquats en amont du réacteur. Un autre inconvénient est la génération d'H₂O correspondant à l'élimination de l'oxygène apporté pendant l'étape de réoxydation. Une autre technique apparentée à celle-ci est une réoxydation/passivation par du dioxyde de carbone. Enfin, il est aussi possible de mouiller le catalyseur par un liquide, ce qui empêche l'oxygène de diffuser dans le grain de catalyseur. La difficulté est alors de charger le réacteur avec un mélange solide/liquide ou au mieux un solide mouillé et dont les grains collent les uns aux autres.

Dans le cas des catalyseurs d'isomérisation à base d'alumine chlorée, il n'y a pas de technique disponible de passivation qui puisse être réversible, car O₂ ou H₂O altèrent irréversiblement les sites actifs. Les techniques employées sont alors d'utiliser des conditionnements très étanches pour le transport, comme par exemple des fûts métalliques avec housse étanche et des systèmes de chargement sous gaz inerte permettant de limiter les contacts du solide avec des traces d'air ou d'humidité.

L'objet de l'invention est de réaliser une passivation des particules du solide par enrobage de la surface externe avec au moins une couche protectrice d'un matériau notamment inerte et éliminable dans le réacteur aux conditions de la réaction. Le coeur du solide, sa porosité interne, est ainsi protégée de l'atmosphère extérieure par cette barrière qui interdit ou limite la diffusion de l'oxygène. L'originalité de l'invention réside notamment dans le fait qu'il s'agit d'un enrobage de solide granulé et non d'une imprégnation de toute la porosité du solide. Par enrobage, on entend soit une couche uniforme d'épaisseur bien déterminée, soit une couche dont la concentration diminue de la périphérie vers l'intérieur de la pellicule de catalyseur, c'est-à-dire une couche dont l'épaisseur varie selon un gradient. Ainsi la concentration de l'enrobage décroit alors de la périphérie au centre du grain. L'enrobage s'effectue de préférence à la surface externe de la particule et la concentration en matériau d'enrobage décroit de la périphérie au centre sans qu'il soit nécessaire qu'il y ait du matériau au centre. Le gradient, donc, décroit puis s'annule à l'approche du centre.

La demande de brevet EP 311 508 décrit le dépôt d'un film protecteur par projection de paraffine, suivie de refroidissement.
La demande de brevet WO 94/25157 décrit un matériau protecteur comprenant un hydrocarbure oxygéné mis en contact avec le catalyseur à une température supérieure à la température de fusion du catalyseur.

La technique d'imprégnation est par exemple mentionnée dans la demande de brevet US 95-398860 du 6/3/96 de CHEM RES & LICENSING qui mentionne le mouillage par une paraffine (wax) suivie de refroidissement. Le brevet USP3453217 de CHEVRON revendique l'imprégnation par une hydrocarbure de haut point d'ébullition. L'imprégnation par un composé hydrocarboné de toute la porosité est un procédé qui permet effectivement d'isoler la phase active de l'atmosphère externe, mais elle présente l'inconvénient de nécessiter une grande quantité de matériau protecteur. Les volumes poreux des catalyseurs usuels étant relativement élevés, de 20 à 80 ml pour 100 g et plus souvent de 30 à 60 ml, le remplissage de la porosité va donc nécessiter en général plus de 30% poids de composé hydrocarboné par rapport au poids de solide. Ceci pose différents problèmes : un coût élevé, une densité de grain élevée qui peut éventuellement occasionner des problèmes lors du chargement du catalyseur dans le réacteur, des problèmes éventuels pour évacuer ce composé lors du démarrage de l'unité.

L'enrobage ou l'encapsulation selon l'invention consiste à remplir le volume poreux non pas de tout le grain, mais simplement préférentiellement de la couronne externe ou d'un gradient du grain, l'objectif étant de déposer une quantité d'agent protecteur équivalente, de préférence, à moins d'environ la moitié correspondant au remplissage du volume poreux, soit par exemple moins de 30 %, et si possible moins de 25 % poids par rapport au solide (catalyseur)..

L'efficacité sera évidemment fonction aussi de la perméabilité à l'oxygène (et dans certains cas à l'eau) du matériau, les produits étant plus ou moins performants en tant que matériau barrière. Les produits les moins perméables pourront permettre des couches protectives plus fines.

Pour enrober les particules de catalyseur (grain. bille. extrudé, ou toute autre forme pulvérente de solide).

On peut utiliser un hydrocarbure lourd, par exemple un distillat sous vide ou une base huile. Ce produit pourra avantageusement être atomisé à chaud afin de réduire sa viscosité, sur un solide froid. La température du solide ne sera pas telle alors que le produit cristallise comme dans les cas précédents, mais telle que la viscosité du liquide dans les pores devienne forte et ralentisse le transport vers le coeur du grain pour obtenir effectivement un effet d'enrobage.

Une autre possibilité adaptable à tout matériau cité ci-dessus est d'utiliser un agent enrobant dilué ou en suspension dans un solvant et en appliquant par atomisation, pulvérisation ou dispersion la solution/suspension à une température supérieure au point d'ébullition du solvant. Ainsi le solvant est rapidement éliminé par vaporisation au contact du catalyseur et le soluté solidifié en couronne (ou toute autre forme équivalente) autour ou dans le grain créant ainsi la couche protectrice.

La couche protectrice sera éliminée dans les conditions d'utilisation du catalyseur selon différents mécanismes. Soit par exemple par dissolution par le milieu réactionnel ou par un solvant spécifique utilisé à cet effet. Ainsi en hydrotraitement de gazole atmosphérique ou en isomérisation de naphta léger, ces deux types de charge vont facilement libérer ainsi l'accès aux sites actifs du catalyseur. Le produit peut aussi être détruit par réaction dans les conditions d'utilisation du catalyseur sous pression d'hydrogène et à chaud les liaisons C-S, C-O, C-N, C-C peuvent être partiellement détruites par hydrogénolyse ou hydrocraquage permettant ainsi la destruction de la couche protectrice.

Cette technique d'enrobage permet d'améliorer plusieurs propriétés des catalyseurs en granulés, billes ou pastilles :
- suppression ou diminution de l'effet autoéchauffant à l'air, ce qui facilite les conditions de transport du produit. Cette propriété est évaluée par les tests ONU d'autoéchauffement.
- amélioration de la résistance mécanique des grains : formation de fines réduite lors du chargement, de la pressurisation et de la mise en huile. Ces propriétés sont évaluées par mesure de l'"attrition en tonneau" et de l'"écrasement en lit" ou "Bulk Crushing Strength".
- amélioration des propriétés tribologiques des grains : les grains qui ont des résistances de frottement réduites glissent plus facilement les uns sur les autres, ce qui permet un chargement plus facile, la diminution de potentielles zônes mortes à faible densité de chargement et donc les passages préférentiels de la charge (channeling). Cette propriété est évaluée par une vitesse d'écoulement du solide à travers un entonnoir.

Ces deux dernières améliorations s'appliquent aussi bien sur un catalyseur frais non présulfuré, préréduit ou prétraité, donc non autoéchauffant que sur un catalyseur susceptible d'être autoéchauffant.

Dans une mise en oeuvre du procédé de l'invention, une étape de mise à l'air contrôlée du catalyseur est effectuée avant la passivation par enrobage. Plus particulièrement, la mise à l'air est opérée en respectant le fait que la températue soit par exemple inférieure à 50°C environ.

La présente invention concerne également les catalyseurs passivés obenus par le procédé de la présente invention, ainsi que leur utilisation dans des procédés de conversin d'hydrocarbures (hydrotraitement notamment).

### Exemple 1 (non conforme à l'invention)

Un catalyseur commercial d'hydrotraitement contenant 20% poids de MoO₃ et 5% de CoO sur support aluminique, de surface spécifique de 210m²/g, est industriellement présulfuré par un tertiononyl polysulfure de façon à obtenir une quantité de soufre d'environ 90% de la stoechiométrie théorique des sulfures MoS₂ et Co₉S₈.

Le tableau suivant résume les caractéristiques physico-chimiques obtenues. Certaines méthodes sont détaillées ci après.

Le catalyseur obtenu est soumis à un test d'auto-échauffement pour déterminer son appartenance à la classe 4.2 des matériaux auto échauffants suivant la norme ONU : 15.5 cc de catalyseur sont placés dans un cube grillagé de 2.5 cm de côté. La maille du grillage est de 0.5 mm. Au centre du cube un thermocouple mesure la température. Le cube est introduit dans une étuve à 140°C et la température à coeur est suivie au cours du temps. Le caractère auto échauffant au sens de la norme est positif si au bout de 24 heures de test, la température à coeur exède 200°C.

Le volume poreux est défini par la quantité maximale d'eau adsorbée par le catalyseur à saturation de celui-ci (en ml d'eau pour 100 g de catalyseur).

Le test d'attrition, version sévérisée de la norme ASTM D4058 par augmentation du temps de test à 3 heures, mesure la résistance mécanique des grains soumis en masse à des chutes répétées dans un tonneau. L'attrition est donnée par le pourcentage poids de fines inférieures à 0.5 mm produites lors de la mise en rotation du catalyseur dans le cylindre tournant.

Le BCS (Bulk Crushing Strength) classe la résistance à l'écrasement par la mesure d'une pression d'un piston exercée sur un lit de solide, laquelle pression génère 0.5% pds de fines de dimension inférieure à 0.5 mm et s'exprime en MégaPascals.

La perte de poids mesure la diminution en pourcentage d'une masse de catalyseur calcinée en four à moufle à 500°C pendant 4 heures.

La vitesse d'écoulement du catalyseur est définie à partir d'un temps nécessaire à la vidange totale de 3 litres du catalyseur au travers d'un orifice circulaire de 14.6mm² de section et s'exprime en litres par minute.

| **Catalyseur présulfuré, cas de base** | |
|---|---|
| Perte de poids (%) | 18.3 |
| Carbone (% pds) | 7.7 |
| Soufre (% pds) | 8.1 |
| Densité tassée (kg/cm³) | 0.86 |
| Bulk Crushing Strength (Mpa) | 1.0 |
| Attrition (% pds) | 1.4 |
| Caractère autoéchauffant | positif |
| Temp. maxi Test ONU (°C) | 445 |
| Volume poreux (ml/100 g) | 23 |
| Vitesse d'écoulement (l/mn) | 1926 |

Le catalyseur doit bien être classé auto échauffant compte tenu de son comportement au test ONU.

### Exemple 2 (non conforme à l'invention)

Le catalyseur sulfuré tel qu'obtenu dans l'exemple n°1 est introduit dans un tonneau en acier en rotation à 100 tours/min. Le tonneau est équipé de 4 releveurs assurant le brassage permanent du catalyseur lors de la rotation et d'une buse de pulvérisation à gaz comprimé (type pistolet à peinture). L'ensemble est chauffé à 50°C.

Une solution à 20 % poids de résine type polymère acrylique dans l'acétate d'éthyle, est lentement pulvérisée sur le catalyseur de façon à déposer 5 g de polymère pour 100 g de catalyseur sur une durée d'une heure. La taille moléculaire du polymère acrylique (> 100 nm) ) est supérieure à la taille des micropores de l'alumine (10 nm). Le réglage de la buse est fait de façon à ce que le solvant vecteur soit pratiquement totalement vaporisé lors du trajet vers les grains de catalyseur. Le polymère est déposé ainsi aléatoirement sur la surface externe des grains de catalyseur en brassage continu, empêchant toute agglomération par collage et créant ainsi une couche protectrice sur toutes les faces et infractuosités de chaque grain élémentaire.

Divers types d'analyses et d'expérimentation sont ensuite effectuées. Elles sont résumées dans le tableau ci-après et explicitées plus loin.

| | **Présulfuré (sans enrobage)** | **Enrobé (produit fini)** | **Enrobé/ Lixivié/Séché** | **Enrobé/ Concassé** |
|---|---|---|---|---|
| Perte de poids (%) | 18.3 | 23.2 | 14.2 | - |
| Carbone (% pds) | 7.7 | 10.3 | 5.0 | - |
| Soufre (% pds) | 8.1 | 7.5 | 7.5 | - |
| BCS (MPa) | 1.0 | 1.3 | - | - |
| Attrition (% pds) | - | 0.5 | - | - |
| Volume poreux (ml/100 g) | 23 | 5.7 | 27 | 19.5 |
| Caractère auto échauffant | positif | négatif | positif | - |
| Temp. maxi Test ONU (°C) | 445 | 155 | 325 | - |
| Vitesse d'écoulement (l/mn) | 1926 | 2022 | - | - |

Soumis au même test d'auto-échauffement que dans l'exemple 1, le catalyseur enrobé n'atteint que 155°C attestant la disparition du caractère d'auto-échauffement par protection externe (voir tableau ci-dessus). Le volume poreux à l'eau est ramené à 25 % de la valeur initiale de l'exemple 1 et atteste le développement d'une barrière entre l'extérieur et le coeur du grain. Le catalyseur enrobé est ensuite partiellement brisé par écrasement de façon à réduire la longueur moyenne des grains de moitié découvrant ainsi une surface non enrobée. Le volume poreux d'imprégnation à l'eau remonte dès lors à 84 % et prouve que seule la surface du grain était protégée. La faible attrition (0.5% de fines au bout de 3 heures) et le BCS (1.3 MPa) témoignent de l'amélioration des propriétés de résistance mécanique du grain aux contraintes physiques tels que celles rencontrées lors des chargements des réacteurs industriels ou lors des à-coups de pression en période de démarrage.

Ensuite nous avons voulu vérifier que c'était bien l'enrobage qui conférait au produit la perte du caractère auto échauffant. Donc ce catalyseur enrobé est soumis à un lavage au toluène chaud (technique du soxhlet) pendant 2 heures. Le lixiviat obtenu est étuvé à 120°C, il laisse un résidu filmogène élastique composé de polymère et de résidus organiques. Après séchage 3 h en couche mince à 120°C en enceinte ventilée, le catalyseur est à nouveau testé en auto-échauffement. La température croît à 325°C et atteste le recouvrement du caractère autoéchauffant. Le volume d'imprégnation remonte à 27 ml soit 118 % de la valeur de base. Donc en enlevant la couche protectrice, on augmente le volume poreux à l'eau et on retrouve le caractère auto échauffant.

Pour confirmer la notion de couche protectrice, nous avons aussi grossièrement écrasé les grains de catalyseur enrobé de façon à raccourcir la longueur moyenne de moitié. Le volume poreux mesuré sur ces grains, présentant donc au moins statistiquement une section pseudo circulaire dépourvue de polymère barrière, remonte à 19.5 ml montrant que l'accès à la porosité est revenu partiellement par les faces brisées et donc non enrobées.

### Exemple 3 (non conforme à l'invention)

100 g du catalyseur oxyde initial de l'exemple 1 sont sulfurés en lit fixe dans un four vertical à 350 °C sous mélange hydrogène/hydrogène sulfuré (H₂/H₂S - 85/15 volume / volume) débitant à 40 l/h sous pression atmosphérique. La durée du palier est de 1 heure puis le catalyseur est refroidi à température ambiante sous azote.

Le catalyseur sulfuré est mis au contact de l'air à raison de 5 paliers successifs d'une heure à des pressions partielles d'oxygène croissant dans la série suivante: 0.5 %, 1 %, 5 %, 10 %, 20%, en respectant le fait que la température reste en deçà de 50°C.

Le produit est déposé dans un tonneau en acier en rotation dans lequel on atomise à 160 °C une cire de polyéthylène de point de fusion 137 °C. Au contact du solide froid, la cire se solidifie en surface de la porosité du grain et la quantité de cire déposée correspond à 8 % poids par rapport au catalyseur.

La même méthodologie que dans les exemples précédents est utilisée, à savoir: analyses du catalyseur sulfuré, du catalyseur enrobé, puis du catalyseur enrobé lixivié à l'heptane à l'heptane.

| | Sulfuré | Enrobé | Lixivié/séché |
|---|---|---|---|
| Perte de poids (%) | 5.1 | 12.9 | 4.1 |
| Carbone (% pds) | 0.1 | 5.5 | 1.3 |
| Soufre (% pds) | 9.5 | 9.1 | 9.3 |
| BCS (MPa) | 1.1 | 1.3 | 1.1 |
| Attrition (% pds) | 1.5 | 0.8 | 1.2 |
| Volume poreux (ml/100 g) | 48 | 4.2 | 43 |
| Caractère autoéchauffant | Positif | Négatif | Positif |
| Temp. maxi Test ONU (°C) | 410 | 155 | 425 |

Le solide enrobé n'est donc plus auto échauffant, mais le redevient si la cire est enlevée par lixiviatition à l'heptane chaud. Le volume poreux suit également les mêmes tendances et les propriétés mécaniques sont aussi améliorées par enrobage

### Exemple 4

Un catalyseur sulfuré suivant l'exemple 3, non soumis à oxydation ménagée passivante à l'air, reçoit une pulvérisation, sous atmosphère inerte à 120 °C, de base d'huile type 600 Neutral (origine TOTAL, viscosité à 40 °C : 120 centipoises). La quantité d'huile déposée représente 20 % poids du solide enrobé.

Après refroidissement à l'ambiante et remise sous air, le catalyseur enrobé est soumis aux traitements suivants :

| | **Présulfuré (base)** | **Enrobé (produit fini)** | **Enrobé/ Lixivié/Séché** | **Enrobé/ Concassé** |
|---|---|---|---|---|
| Perte de poids (% pds) | NA | 20.1 | 8.5 | - |
| Carbone (% pds) | 0.3 | 15.5 | 2.4 | |
| Soufre (% pds) | 9.8 | 8.7 | 9 | - |
| Volume poreux (ml/100 g) | 47 | 10 | 39 | 30 |
| Caractère autoéchauffant | Positif | Négatif | Positif | - |
| Temp. maxi Test ONU (°C) | NA | 160°C | NA | - |

A l'instar des exemples précédents, on note la disparition du caractère autoéchauffant et un bouchage partiel de la porosité externe du catalyseur enrobé. L'enrobage est éliminé par solubilisation dans le toluène.

### Exemple 5 (non conforme)

L'exemple est réalisé sur un catalyseur commercial contenant 75 % poids d'oxyde de nickel (NiO), utilisé pour des réactions d'hydrogénation. 80 g de ce produit est chargé dans un réacteur vertical en verre et réduit en lit fixe sous hydrogène à 450°C pendant 2 heures, puis refroidi sous azote.

Le réacteur est ensuite transféré dans une boîte à gant remplie d'azote et son contenu vidé dans un vase Dewar. Celui-ci est ensuite sorti de la boîte et donc brusquement exposé à l'air. La température interne du catalyseur est suivie par un thermocouple ; celle-ci monte brusquement jusqu'à 175°C.

### Exemple 6 (non conforme à l'invention)

La même méthodologie qu'à l'exemple précédent est utilisée, à ceci près que le catalyseur va être enrobé après réduction de la façon suivante : dans la boîte à gants sous azote, le contenu du réacteur (le catalyseur réduit à 450°C sous hydrogène) est vidé dans un tonneau en acier et chauffé à 60°C par une lampe à infrarouge. Une solution à 20 % poids de résine type polymère acrylique dans l'acétate d'éthyle est vaporisée sur le solide en rotation de telle façon à déposer 10 % de résine. Le produit est laissé en rotation pour séchage pendant une heure, puis refroidi une heure et soumis au test DEWAR comme à l'exemple précédent. La température interne lors de la remise à l'air passe de 27 à 35°C, ce qui prouve que la réaction d'oxydation a été extrèmement limitée à cause de la couche de polymère protectrice ralentissant la diffusion de l'oxygène.

## Revendications

1. Procédé de passivation d'un catalyseur hétérogène de réactions de raffinage ou d'hydroconversion d'hydrocarbure contenant les associations métalliques Co Mo, Ni Mo, Ni W sur support alumine et / ou silice-alumine qui contiennent une phase active de type sulfure métallique dans lequel on enrobe la surface externe des particules dudit catalyseur hétérogène d'au moins une couche protectrice d'un matériau d'enrobage, qui est une base lubrifiante choisie dans le groupe des composés hydrocarbonés (2), en maintenant le catalyseur sous agitation, d'origine pétrolière qui est déposée (2) en une quantité égale à moins de 30% poids par rapport au solde (catalyseur), qui est atomisée à chaud afin de réduire sa viscosité sur un solide froid
ou
qui est diluée dans un solvant et est appliquée par atomisation, à une température supérieure au point d'ébullition du solvant qui est rapidement éliminé par vaporisation au contact du catalyseur procédé dans lequel le matériau est inerte et est éliminable dans la zone réactionnelle aux conditions de la réaction de raffinage ou d'hydroconversion.

2. Procédé selon la revendication 1 dans lequel la quantité d'agent est égale à moins de 25% poids par rapport au solide (catalyseur).

## Claims

1. Process of passivation of a heterogenous catalyst of refining reactions or hydrocarbon hydroconversion reactions, containing the metal combinations Co Mo, Ni Mo, NiW on an alumina or silica-alumina substrate whereby said combinations contain an active phase such as metal sulfide, wherein the external surface of the particles of said heterogeneous catalyst is coated with at least one protective layer that is made of a coating material, which is a lubricating oil selected in the group of hydrocarbon compounds of petroleum origin which is deposited, while maintaining stirring of the catalyst, in a quantity less than 30 % weight relative to the solid (catalyst), which is atomized under hot conditions to reduce its viscosity, on a cold solid, or which is diluted in a solvent and is applied by atomization at a temperature that is greater that the boiling point of the solvent which is quickly eliminated by vaporization upon contact with the catalyst, process wherein the material is inert and is eliminable in the reaction zone under the conditions of the refining or hydroconversion reaction.

2. Process according to claim 1 wherein the quantity of the agent is less than 25 % weight relative to the solid (catalyst).

## Patentansprüche

1. Verfahren zur Passivierung eines heterogenen Katalysators für Raffinationsreaktionen oder hydrierende Umwandlungsreaktionen, in welchem die Metalle Co Mo, Ni Mo oder Ni W jeweils in Verbindung miteinander vorliegen, und zwar auf einem Trägerstoff aus Aluminiumoxid und/oder Siliziumdioxid/Aluminiumoxid, das eine aktive Phase des Typs Metallsulfid enthält, wobei die Außenfläche der Partikel des heterogenen Katalysators mit mindestens einer Schutzschicht aus einem Überzugsmaterial überzogen wird, bei welchem es sich um einen Schmiermittelgrundstoff mineralischer Herkunft handelt, der aus der Gruppe der Kohlenwasserstoffe gewählt ist und der unter Rühren des Katalysators in einer Menge von weniger als 30 Gewichts%, bezogen auf den Feststoff (Katalysator), aufgebracht wird, wobei er entweder in heißem Zustand, um seine Viskosität au verringern, auf einen kalten Feststoff gesprüht wird
oder
in einem Lösemittel verdünnt wird, wobei das Aufbringen durch Versprühen bei einer Temperatur erfolgt, die höher als der Siedepunkt des Lösemittels ist, wobei letzteres beim Kontakt mit dem Katalysator rasch durch Verdampfen entfernt wird,
wobei in dem Verfahren das Material inert ist und im Reaktionsbereich, in welchem die Bedingungen der Raffination oder der Hydrokonversion herrschen, entfernt werden kann.

2. Verfahren gemäß Anspruch 1, wobei die Menge des Mittels weniger als 25 Gewichts%, bezogen auf den Feststoff (Katalysator), beträgt.
